# EUROPEAN PATENT APPLICATION

(11) **EP 4 345 008 A1**
(43) Date of publication of application: **03.04.2024**
(21) Application number: 22198107.9
(22) Date of filing: 27.09.2022
(51) Int. Cl.: B64D 37/30, F17C 3/08

(54) **METHOD AND APPARATUS FOR MANUFACTURING A HYDROGEN TANK, TANK OBTAINABLE THEREWITH AND AIRCRAFT**

(71) Applicant: Airbus Operations GmbH, 21129 Hamburg (DE)
(72) Inventor: Wesseloh, Marc, 21129 Hamburg (DE); Merten, Annalena, 21129 Hamburg (DE)

(57) **Abstract**

In order to simplify manufacturing of a hydrogen tank (10) that can reliably retain H2 therein and has a low weight, the invention provides a manufacturing method for manufacturing a hydrogen tank (10) for a vehicle (12), comprising the steps of:
a) providing a hydrogen tank body (56) with an inner tank wall (58) made from fibre reinforced composite material, and
b) galvanic coating of an inner side (20) of the inner tank wall (58) in order to generate a galvanic liner layer (22).

## Description

The invention relates to a manufacturing method for manufacturing a hydrogen tank, especially a cryogenic hydrogen tank, more especially a tank for an aircraft. Further, the invention relates to a hydrogen tank obtainable with such method as well as to an aircraft equipped therewith. Further, the invention relates to a manufacturing apparatus for manufacturing the hydrogen tank.

For technical background of the invention, reference is made to the following references:
[1] Selbstdichtender Treibstofftank - Wikipedia, download from https://de.wikipedia.org/wiki/Selbstdichtender_Treibstofftank on 29.08.2022
[2] Membranspeicher - Wikipedia, download from https://de.wikipedia.org/wiki/Membranspeicher on 29.08.2022
[3] Blasenspeicher - Wikipedia, download from https://de.wikipedia.org/wiki/Blasenspeicher on 29.08.2022
[4] Polytetrafluorethylen - Wikipedia, download from https://de.wikipedia.org/wiki/ Polytetrafluorethylen on 29.08.2022
[5] Website https://cryokit.de/handschuhe/, download on 29.08.2022
[6] Website https://ralicks.de/deutsch/werkstoff.htm, download on 29.08.2022
[7] http://www.gummitech.com/urunlerimiz/hangi-kaucuk-nerede-kullanilabilir/, download on 29.08.2022
[8] US 2015/0 336 680 A1
[9] EP 3 498 620 B1
[10] Electroplating - Wikipedia, download from https://en.wikipedia.org/wiki/Electroplating on 29.08.2022
[11] Galvanotechnik - Wikipedia, download from https://de.wikipedia.org/wiki/Galvanotechnik on 30.08.2022
[12] Elektrophoretische Abscheidung - Wikipedia, download from https://de.wikipedia.org/wiki/Elektrophoretische_Abscheidung on 30.08.2022

Cryogenic storage tanks may be used for storing liquid hydrogen, for example, for use as a fuel for driving a vehicle. The vehicle may be a motor vehicle such as a car, lorry or train or may be an aircraft. Citations [8] and [9] disclose a tank for the cryogenic storage of hydrogen and an aircraft with a tank installed therein. Liquid hydrogen stored within the tank is used as a fuel for the aircraft engine in place of carbon-based fuels such as kerosene. The cryogenic storage tank is typically substantially cylindrical and includes openings for allowing the tank to be filled with hydrogen as well as to supply the stored liquid hydrogen to the engine.

Hydrogen has a very high interfuse rate; the density is so low that non-metallic material will be infused.

An object of the invention is to reduce the weight of a H2-tank having a high capacity to retain H2 while the manufacturing process of the H2-tank is simplified.

For achieving such object, the invention provides a manufacturing method according to claim 1. A H2-tank achievable with such method, a manufacturing apparatus for conducting the method and an aircraft equipped with such a H2-tank achievable by such method are subject-matters of the further independent claims.

Advantageous embodiments are subject-matters of the dependent claims.

The invention provides according to one aspect thereof a manufacturing method for manufacturing a hydrogen tank, comprising the steps of:
a) providing a hydrogen tank body with an inner tank wall made from fibre reinforced composite material, and
b) galvanic coating of an inner side of the inner tank wall in order to generate a galvanic liner layer.

Preferably, step a) comprises:
a1) providing the hydrogen tank body with an inner tank wall made from CFRP.

Preferably, step a) comprises:
a2) providing the hydrogen tank body with an outer tank wall for thermal insulation, wherein a space between the inner and outer tank wall is evacuated and/or filled with thermal insulation material.

Preferably, step a) comprises:
a3) providing the hydrogen tank body with a line connection communicating with the inside of the inner tank wall.

Preferably, step a) comprises:
a4) cleaning, especially chemical and/or blast cleaning, of the inner surface of the inner tank wall.

Preferably, step a) comprises:
a5) checking the quality of the inner surface of the inner tank wall, especially by surface inspection, more preferred optical or ultrasonic surface inspection.

Preferably, step b) comprises:
b1) filling the hydrogen tank body with galvanic fluidity.

Preferably, step b) comprises:
b2) conducting electroplating.

Preferably, step b) comprises:
b3) moving the hydrogen tank body in order to reach the whole inner surface area of the inner tank side.

Preferably, step b) comprises:
b4) applying a higher tank pressure within the hydrogen tank body compared to the environment during the galvanic process.

Preferably, step b) comprises:
galvanic coating the inner side with a coating material chosen from the group consisting of metal, non-corrosive metal, titan, gold, silver, ceramic and plastic.

Preferably, the method further comprises:
c) surface repressing, especially by high pressure pressing, of the coating material applied by the galvanic process.

Preferably, the method further comprises:
d) cleaning of the galvanic liner layer.

Preferably, the method further comprises:
e) measuring the thickness of the galvanic liner layer.

Preferably, the method further comprises:
f) maintenance with regular inspections after periods of time.

According to another aspect, the invention provides a hydrogen tank, especially cryogenic hydrogen tank, obtainable by the method according to any of the preceding embodiments, comprising
hydrogen tank body with an inner tank wall made from fibre reinforced composite material and
an inner galvanic liner layer at the inner side of the hydrogen tank body.

Preferably, the hydrogen tank body comprises an inner tank wall from CFRP.

Preferably, the hydrogen tank body comprises an outer tank wall for thermal insulation, wherein a space between the inner and outer tank wall is evacuated and/or filled with thermal insulation material.

Preferably, the hydrogen tank body comprises a line connection communicating with the inside of the inner tank wall.

According to another aspect, the invention provides an aircraft comprising such a hydrogen tank.

According to another aspect, the invention provides a manufacturing apparatus for manufacturing a hydrogen tank, especially a cryogenic hydrogen tank, more especially a tank for an aircraft. Preferably, the manufacturing apparatus is configured to conduct the manufacturing method according to any of preceding embodiments.

The manufacturing apparatus comprises:
means for providing a hydrogen tank body with an inner tank wall made from fibre reinforced composite material, and
means for galvanic coating of an inner side of the hydrogen tank body in order to generate a galvanic liner layer.

Preferably, the manufacturing apparatus comprises a cleaning lance for passing through a line connection of a hydrogen tank body and for cleaning the inner surface of the hydrogen tank body.

Preferably, the manufacturing apparatus comprises an inspection device for inspecting the inner surface of the hydrogen tank body.

Preferably, the means for galvanic coating comprise a filling device for filling the hydrogen tank body with a galvanic fluid.

Preferably, the means for galvanic coating comprise an electroplating device including an anode to be introduced into the galvanic fluid and an electric terminal that can be electrically connected to the surface material of the inner tank wall of the hydrogen tank body. For further details about electroplating devices, reference is made to [10] and [11].

Preferably, the means for galvanic coating comprise a moving device, especial gimbal moving device, configured to moving or rotate the hydrogen tank body such that the galvanic fluid reaches the whole inner surface area to achieve a constant thickness.

Preferably, the means for galvanic coating comprise a pressure applying device to apply an inner pressure in the inside of the hydrogen tank body during the galvanic process which inner pressure is higher, preferably more than 5-10 bar higher, as an outer pressure around the hydrogen tank body.

Preferably, manufacturing apparatus comprises a repressing lance for repressing the coated surface.

Preferably, manufacturing apparatus comprises a thickness measuring device for measuring the coating thickness.

Preferably, manufacturing apparatus comprises an inspection lance for optical or ultrasonic inspection of the galvanic liner layer.

Preferred embodiments of the invention refer to a galvanic hydrogen tank liner, and the manufacturing thereof.

Due to the high infusion rate of hydrogen, it is preferred to provide a hydrogen tank, having a tank wall made from non-metallic material, with a metal layer to stop or reduce the interfuse rate.

With preferred embodiments, it is possible to integrate a galvanic liner layer inside a liquid hydrogen CFRP tank.

According to present internal ideas for manufacturing a hydrogen tank which is made, at least partially, from CFRP, first a steel liner tank is manufactured and then CFRP fibres or prepregs are wrapped around the steel tank.

Preferred embodiments of the invention aim to reduce the weight and simplify the manufacturing process of the tank.

Preferably, the hydrogen tank has an inner hydrogen tank made from fibre reinforced material, especially CFRP. The hydrogen tank preferably has an outer insulation tank, preferably with vacuum between the walls of the inner hydrogen tank and the outer insulation tank. Further, the hydrogen tank preferably has a distribution line. The distribution line is configured for filling and/or emptying the tank. According to preferred embodiments, the distribution line is an implementation line for obtaining a surface protection. Especially, the liquids and equipment for conducting the galvanic process are introduced via the distribution line.

Preferably, the inner surface of a CFRP tank is chemically galvanized. Different coating materials are possible, preferably titan, gold, other metals, ceramics or even plastic, see [12].

A preferred method has the following process steps:
1. Galvanic coating of the tank inner side, moving the tank to reach all areas and to get a smooth galvanic thickness
2. Shot-blasting of the inner tank to sealing of anodic coating (surface repressing)
3. Inspection of the thickness via ultrasonic
4. Optical inspection.

Preferred embodiments of the invention have the following features:
- chemical galvanization of the inner side of a CFRP tank
- different materials can be applied (such as titan, gold, silver,). Preferably, only a metal which has no risk of corrosion (less electrochemical potential) is used.
- other materials like ceramics or plastic which can be applied by a galvanic (=electrochemical) process (see, e.g., [4]-[7] or [10]-[12]) can be considered.

Embodiments of the invention are explained below referring to the accompanying drawings in which:
- Fig. 1: shows a perspective schematic view of an aircraft as an example for a vehicle equipped with a hydrogen tank, especially a cryogenic tank for storing liquid hydrogen (LH2);
- Fig. 2: shows a schematic block diagram of a manufacturing apparatus for manufacturing the hydrogen tank;
- Fig. 3: is a schematic sectional view of the hydrogen tank according to an embodiment of the invention;
- Fig. 4: is an enlarged view of the detail IV of Fig. 3;
- Fig. 5: is a sectional view of a hydrogen tank body during a cleaning step of a manufacturing method for manufacturing the hydrogen tank;
- Fig. 6: is a sectional view of the hydrogen tank body during a galvanic coating step of the manufacturing method;
- Fig. 7: is a schematic perspective view illustrating a moving device for moving the hydrogen tank body during the galvanic coating step;
- Fig. 8: is a sectional view of the hydrogen tank body during a surface repressing step of the manufacturing method; and
- Fig. 9: is a sectional view of the hydrogen tank body during an inspection step of the manufacturing method or during maintenance of the hydrogen tank.

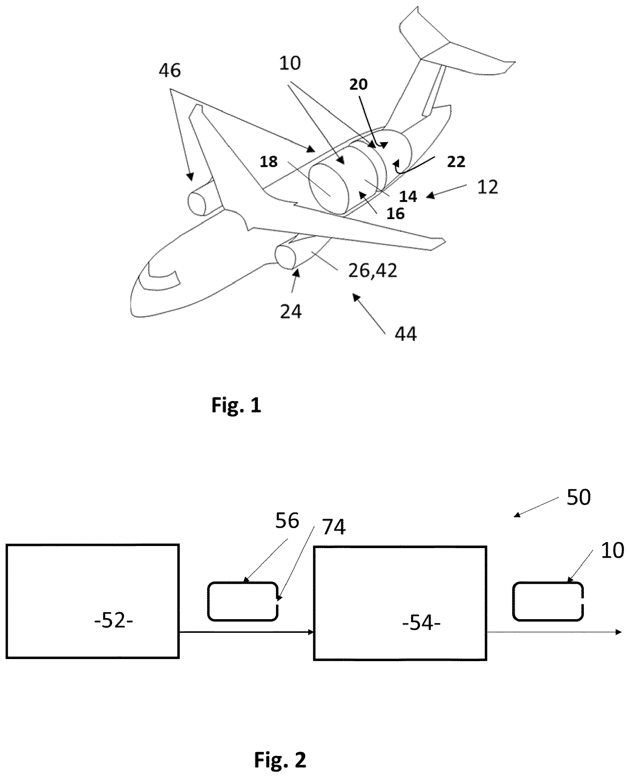

Fig. 1 shows an aircraft, especially an airplane 44 as an example for a vehicle 12 in which a hydrogen tank 10 is used. The airplane 44 has a propulsion system 46 with turbines 42 as engines 26. The turbines 42 are configured to burn hydrogen supplied from the hydrogen tank 10. Further, the airplane 44 may be equipped with fuel cells (not shown), wherein hydrogen is supplied to the fuel cells from the hydrogen tank 10.

The hydrogen tank 10 has, e.g., a cylindrical shape. The hydrogen tank 10 is configured as a cryogenic tank for storing liquid hydrogen (LH2) at cryogenic temperatures. At least one wall component 14 of the tank, such as for example the middle cylindrical part 16 and an end cap 18 or the whole inner tank wall 58 (see

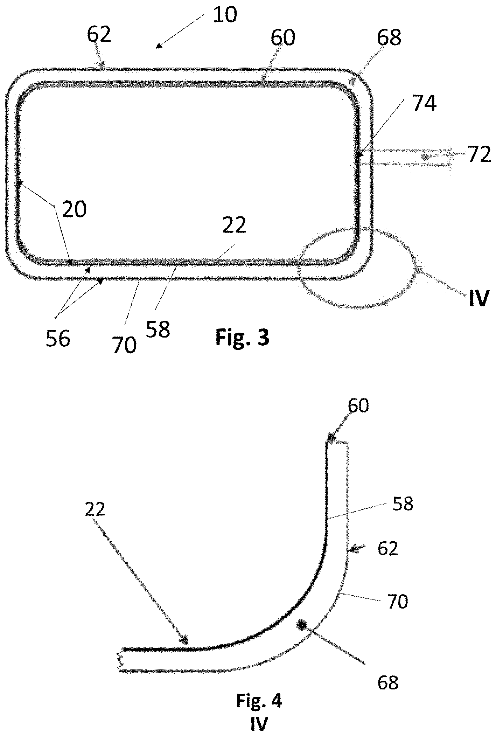

Fig. 3) is made of fibre reinforced composite material, especially CFRP. The inner surface 20 of the wall component 14 is coated with a galvanic liner layer 22 (=electrochemically deposited liner layer), preferably of metallic material. Here, the inner surface 20 is the surface having contact with the LH2.

Fig. 2 shows a schematic block diagram of a manufacturing apparatus 50 for manufacturing the hydrogen tank 10. The manufacturing apparatus 50 comprises means 52 for providing, especially manufacturing, a hydrogen tank body 56 and means 54 for galvanic coating an inner side of the hydrogen tank body 56.

Especially, the means 52 for providing the hydrogen tank body is a means for manufacturing such a hydrogen tank body and is configured for manufacturing a hydrogen tank body 56 (explained in more detail below with reference to Fig. 3) having an inner tank wall 58 made from fibre reinforced composite material. The means 54 for galvanic coating is configured to apply a galvanic coating, especially of metallic material, onto the inner surface 20, of the wall component 14 by conducting a galvanic process.

Fig. 3 is a sectional view of the hydrogen tank 10, while Fig. 4 shows an enlarged view of the detail IV of Fig. 3. Referring to Figs. 3 and 4, the hydrogen tank 10 has an inner hydrogen tank 60 and an outer insulation tank 62.

The inner hydrogen tank 60 comprises the inner tank wall 58. The inner hydrogen tank 60 is manufactured from fibre reinforced plastic material, especially CFRP, in a manner known per se. An inner surface 20 at the inner side of the inner tank wall 58 is equipped with the galvanic liner layer 22 of a non-corrosive metal, such as titan, gold, silver, ...

The outer insulation tank 62 is made from any suitable material such as CFRP or metal. The outer insulation tank 62 encloses the inner hydrogen tank 60. A space 68 between the walls 58, 70 of the inner hydrogen tank 60 and the outer insulation tank 62 contains vacuum. In other embodiments (not shown), the space 68 is filled with thermally insulating material.

Further, the hydrogen tank 10 comprises a distribution line 72 for filling and emptying the hydrogen tank. The distribution line 72 communicates with the inside of the hydrogen tank 10 via a line connection 74.

Referring now to Figs. 4 to 9, preferred embodiments of a manufacturing method for manufacturing the hydrogen tank 10 is explained.

First, a hydrogen tank body 56 is provided comprising the inner tank wall 58 is provided. In the embodiment shown, the hydrogen tank body 56 is provided such that it comprises both the inner tank wall 58 and the surrounding outer wall 70 of the outer insulation tank 58. Especially, the inner tank wall 58 is manufactured from CFRP, and is enclosed in the outer insulation tank 58. In several embodiments, the hydrogen tank body 56 may comprise all components of the hydrogen tank 10 except the galvanic liner layer 22.

As shown in Fig. 4, then the inner surface 20 is cleaned. The means 54 for galvanic coating comprise a cleaning device 76 including a cleaning lance 78 which is configured to pass through the distribution line 72 or the line connection 74 and is configured to clean the inner surface 20, especially by chemical cleaning and/or blast cleaning.

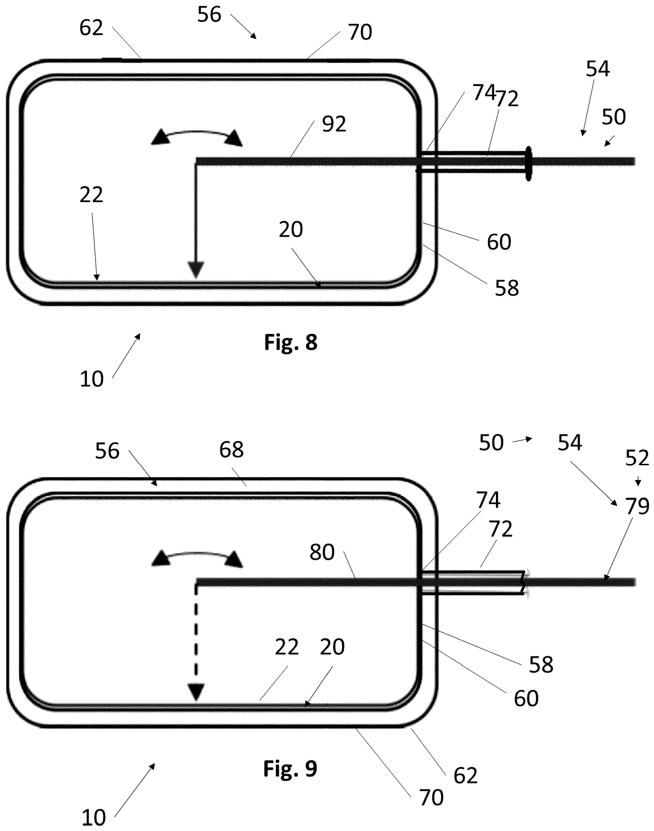

Next, the result of the cleaning step is checked by a quality check. For example, an optical and/or ultrasonic surface inspection is conducted in order to check the quality of the cleaning. If necessary, the cleaning is continued until a required cleaning result is achieved. For conducting the surface inspection, the means 54 for galvanic coating may include an inspection lance 80 such as shown in Fig. 9 which is configured to be introduced via the line connection 74 into the interior of the hydrogen tank body 56 and is configured to conduct the surface inspection.

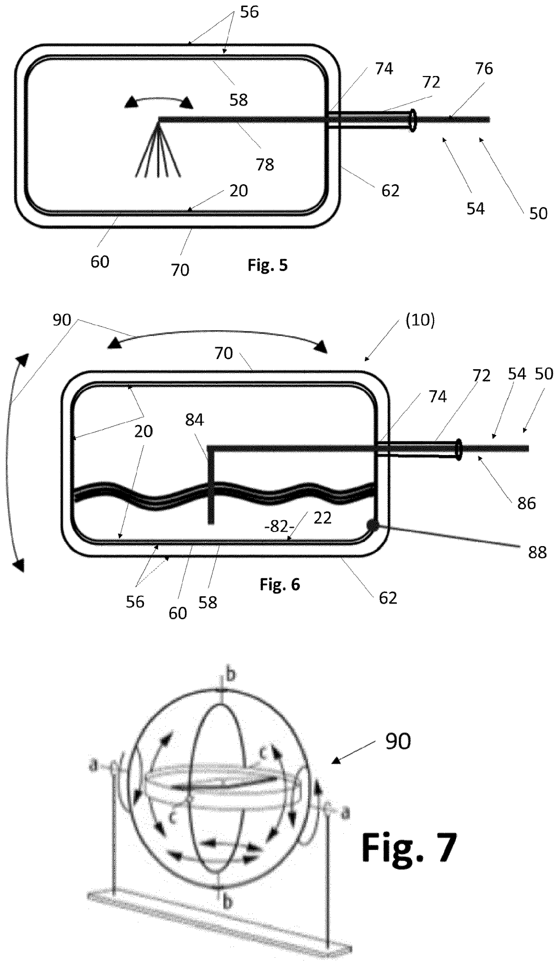

Then, as shown in Fig. 5, the hydrogen tank body 56 is filled to a predetermined amount with a galvanic liquid 82. Further, a first electrode, such as an anode 84, of an electroplating means 86 of the means 54 for galvanic coating is introduced into the galvanic liquid 82. The inner surface 20 forms the second electrode, such as a cathode 88, of the electroplating means 86 and is connected electrically accordingly. The hydrogen tank body 56 is held by a moving device 90 configured to move and rotate the hydrogen tank body 56 such that the whole area of the inner surface 20 is wetted by the galvanic liquid. The moving and rotating is conducted such that a coating is electrochemically deposited thereon with a uniform thickness.

In several embodiments of the method, a higher pressure is generated within the interior of the hydrogen tank body 56 during the galvanic process (=electrochemical deposition process). The pressure is more than 5 to 10 bars higher as the pressure outside of the hydrogen tank body 56. Thus, the galvanic process is conducted under overpressure. The tank expansion resulting from the higher tank pressure prepares the tank stretch during later use.

Hence, according to preferred embodiments, the galvanic application comprises the following steps:
- filling the tank with galvanic fluidity
- electroplating
- moving of the tank (gimbal) to reach all surfaces (rotating/pivoting of the tank body)
- galvanic process with higher tank pressure > 5-10 bar; tank expansion should prepare the tank stretch during later use.

After applying the galvanic coating, a surface repressing is conducted as shown in Fig. 8. The means 54 for galvanic coating comprise a repressing lance 92 configured to be introduced into the tank interior via the line connection 74 and is configured to repress the coated material in order to form the galvanic liner layer 22.

Further, a cleaning step is conducted in order to clean the surface of the galvanic liner layer 22.

The repressing can be made by applying mechanical, pneumatic or hydraulic pressure, in a static and/or vibrating way, onto the inner surface of the galvanic liner layer 22. The repressing is conducted such that the material of the galvanic liner layer 22 is further compacted, the surface is smoothed and/or pores are closed.

After the cleaning of the compacted galvanic liner layer 22, a further inspection step is conducted in order to check the quality and especially thickness of the galvanic liner layer 22, as indicated in Fig. 9. An inspection device including the inspection lance 80 is especially configured to carry out an ultrasonic inspection in order to measure layer thickness. Additionally, an optical inspection is possible.

Depending on the result of the inspection step, the galvanic application step maybe repeated in order to increase the thickness and/or to cover a surface area which remained uncoated in the first step. In case that the quality and thickness is okay, the hydrogen tank 10 is forwarded to further steps such as installing the hydrogen tank 10 into the vehicle 12.

During the lifetime in which the hydrogen tank 10 is in use, it may be regularly inspected, such as shown in Fig. 9, e.g., with optical means and/or ultrasonic waves. Such inspection steps may be conducted during maintenance of the vehicle 12 such as the airplane 44.

The above-mentioned method is only a preferred embodiment, and other methods for providing the galvanic liner layer 22 on the inner surface 20 are possible. For example, the galvanic application may be conducted after manufacturing of the inner tank wall 58, before it is enclosed by the outer insulation tank 62.

### Reference sign list:

- 10: hydrogen tank
- 12: vehicle
- 14: wall component
- 16: cylindrical part
- 18: end cap
- 20: inner surface
- 22: galvanic liner layer
- 26: engine
- 42: turbine
- 44: airplane
- 46: propulsion system
- 50: manufacturing apparatus
- 52: means for providing the hydrogen tank body
- 54: means for galvanic coating
- 56: hydrogen tank body
- 58: inner tank wall
- 60: inner hydrogen tank
- 62: outer insulation tank
- 68: space
- 70: outer tank wall
- 72: distribution line
- 74: line connection
- 76: cleaning device
- 78: cleaning lance
- 79: inspection device
- 80: inspection lance
- 82: galvanic liquid
- 84: anode
- 86: electroplating device
- 88: cathode
- 90: moving device
- 92: repressing lance

## Claims

1. Manufacturing method for manufacturing a hydrogen tank (10) for a vehicle (12), comprising the steps of:
a) providing a hydrogen tank body (56) with an inner tank wall (58) made from fibre reinforced composite material, and
b) galvanic coating of an inner side (20) of the inner tank wall (58) in order to generate a galvanic liner layer (22).

2. Manufacturing method according to claim 1, **characterized in that** step a) comprises at least one or several of the steps:
a1) providing the hydrogen tank body (56) with an inner tank wall made from CFRP;
a2) providing the hydrogen tank body (56) with an outer tank wall (70) for thermal insulation, wherein a space (68) between the inner tank wall (58) and the outer tank wall (70) is evacuated and/or filled with thermal insulation material;
a3) providing the hydrogen tank body (56) with a line connection (74) communicating with the inside of the inner tank wall (58).

3. Manufacturing method according to any of the preceding claims, **characterized in that** step a) comprises at least one or several of the steps:
a4) cleaning, especially chemical and/or blast cleaning, of the inner surface (20) of the inner tank wall (58);
a5) checking the quality of the inner surface (20) of the inner tank wall, especially by surface inspection, more preferred optical or ultrasonic surface inspection.

4. Manufacturing method according to any of the preceding claims, **characterized in that** step b) comprises at least one or several of the steps:
b1) filling a galvanic fluidity into the inner tank wall (58);
b2) conducting electroplating;
b3) moving the hydrogen tank body (56) in order to reach the whole inner surface area of the inner side (20);
b4) applying a higher tank pressure within the hydrogen tank body (56) compared to the environment during the galvanic process.

5. Manufacturing method according to any of the preceding claims, **characterized in that** step b) comprises:
galvanic coating the inner side (20) with a coating material chosen from the group consisting of metal, non-corrosive metal, titan, gold, silver, ceramic and plastic.

6. Manufacturing method according to any of the preceding claims **characterized by** at least one or several of the further steps:
c) surface repressing, especially by high pressure pressing, of the coating material applied by the galvanic process;
d) cleaning of the galvanic liner layer (22);
e) measuring the thickness of the galvanic liner layer (22);
f) maintenance with regular inspections after periods of time.

7. Hydrogen tank (10), especially cryogenic hydrogen tank, obtainable by the method according to any of the preceding claims, comprising a hydrogen tank body (56) with an inner tank wall (58) made from fibre reinforced composite material and
an inner galvanic liner layer (22) at the inner side (20) of the hydrogen tank body (56).

8. Hydrogen tank (10) according to claim 7, further comprising at least one or several of:
8.1 an inner tank wall (58) of CFRP;
8.2 an outer tank wall (70) for thermal insulation, wherein a space (68) between the inner tank wall (58) and the outer tank wall (70) is evacuated and/or filled with thermal insulation material;
8.3 a line connection (74) communicating with the inside of the inner tank wall (58).

9. Aircraft comprising a hydrogen tank (10) obtained by the method according to any of the claims 1 to 6 or a hydrogen tank (10) according to claim 7 or 8.

10. Manufacturing apparatus (50) for conducting the manufacturing method according to any of the claims 1 to 6, comprising:
10.1 means (52) for providing a hydrogen tank body with an inner tank wall (58) made from fibre reinforced composite material, and
10.2 means (54) for galvanic coating of an inner side (20) of the hydrogen tank body (56) in order to generate a galvanic liner layer (22).

11. Manufacturing apparatus (50) according to claim 10, further comprising at least one or several of:
11.1 a cleaning device (76) including a cleaning lance (78) for passing through a line connection (74) of the hydrogen tank body (56) and for cleaning the inner surface (20) of the hydrogen tank body (56);
11.2 an inspection device (79) for inspecting the inner surface (20) of the hydrogen tank body (56).

12. Manufacturing apparatus (50) according to any of the claims 10 or 11, **characterized in that** the means (54) for galvanic coating comprise at least one or several of the following:
12.1 means for filling the hydrogen tank body (56) with a galvanic liquid (82);
12.2 an electroplating device (86) including a first electrode to be introduced into the galvanic liquid (82) and an electric terminal that can be electrically connected to the surface material of the inner tank wall (58) of the hydrogen tank body (56);
12.3 a moving device (90), especial gimbal moving device, configured to move or rotate the hydrogen tank body (56) such that the galvanic liquid (82) reaches the whole inner surface area to achieve a constant thickness;
12.4 a pressure applying device to apply an inner pressure in the inside of the hydrogen tank body during the galvanic process which inner pressure is higher, preferably more than 5-10 bar higher, as an outer pressure around the hydrogen tank body.

13. Manufacturing apparatus (50) according to any of the claims 10 to 12, further comprising at least one or several of:
13.1 a repressing lance (92) for repressing the coated surface;
13.2 a thickness measuring device for measuring the coating thickness;
13.3 an inspection lance (80) for optical or ultrasonic inspection of the galvanic liner layer (22).
